# EUROPEAN PATENT APPLICATION

(11) **EP 3 163 351 A1**
(43) Date of publication of application: **03.05.2017**
(21) Application number: 16195771.7
(22) Date of filing: 26.10.2016
(51) Int. Cl.: G02B 19/00, G02F 1/1335

(54) **OPTICAL ELEMENT AND DISPLAY DEVICE**

(30) Priority: 29.10.2015 JP 2015212775
(71) Applicant: Funai Electric Co., Ltd., Daito Osaka 574-0013 (JP)
(72) Inventor: TANABE, Noritaka, Daito, Osaka 574-0013 (JP)
(74) Representative: Global IP Europe Patentanwaltskanzlei

(57) **Abstract**

A display device comprises a display component, a light emitting element, and an optical element. The light emitting element is configured to emit light to the display component. The optical element is configured to refract the light. The optical element includes an emission component, a protrusion, and a leg. The emission component has a bottom face on which the light from the light emitting element is incident, and a top face from which the incident light is emitted. The protrusion protrudes outward in a radial direction of the emission component, and has a first face on the top face side and a second face on the bottom face side. The leg is provided to at least one of the second face and the bottom face. The first face is inclined relative to the second face.

## Description

This application claims priority to Japanese Patent Application No. 2015-212775 filed on October 29, 2015.

### BACKGROUND

### Field of the Invention

The present invention generally relates to an optical element and a display device. More specifically, the present invention relates to an optical element and a display device having a configuration that diffuses light. Background Information

There are known diffusing lenses having a configuration that diffuses light (see JP 2013-242499 A, for example).

The above-mentioned JP 2013-242499 A discloses a display device including diffusing lenses that diffuse light. The display device also includes a display portion, and light emitting diodes (LEDs) that emit light onto the diffusing lenses. The diffusing lenses each have a main body with a bottom surface on which light is incident. The main body emits the incident light. Also, the diffusing lenses each have engaging portions provided to the bottom surface face of the main body. Also, the diffusing lenses each have protrusions that protrude outward from the main body. These protrusions are provided at positions that overlap the engaging portions in plan view (as seen from the display portion side). Also, the light emission faces of the protrusions (the faces on the display component side) are flat faces that are parallel to the bottom face of the main body.

### SUMMARY

With this conventional display device, the diffusing lens is fixed (attached) by hand. Also, with this diffusing lens, the positions of the engaging portions can be identified by the positions of the protrusions during attachment work. Specifically, the protrusions function as markers for identifying the positions of the engaging portions. Although not explicitly disclosed in the above-mentioned JP 2013-242499 A, these protrusions are needed to identify the positions of the engaging portions even when the diffusing lens is mounted by a robot.

With the above-mentioned JP 2013-242499 A, however, the faces of the protrusions that emit light (the faces on the display portion side) are flat faces that are parallel to the bottom faces of the protrusions. It has been discovered that when light from the LED passes through these flat faces, more of the light goes directly over the faces of the protrusions from which the light is emitted (in a direction perpendicular to the display component). This could end up with brightness unevenness, such as bright spots or bright lines, on the display portion.

One object is to provide an optical element and a display device with which there is less unevenness in light generated at a display component.
[1] In view of the state of the known technology and in accordance with a first aspect of the present invention, an optical element comprises an emission component, a protrusion, and a leg. The emission component has a bottom face on which light is incident, and a top face from which the incident light is emitted. The protrusion protrudes outward in a radial direction of the emission component, and has a first face on a top face side and a second face on a bottom face side. The leg is provided to at least one of the second face and the bottom face. The first face is inclined relative to the second face.
   With this optical component, the first face on the top face side of the protrusion (the side where the light is emitted) is inclined relative to the second face and/or the bottom face. Consequently, compared to when the first face is provided parallel to the second face and the bottom face, when light from the light emitting element or other light source has passed through the first face, more of the light will be heading in a direction that is inclined to a display component, and less of the light will be heading directly over the first face (in a direction perpendicular to the display component). Therefore, light can be emitted over a wider region (surface area) of the display component (the light can be more diffused) than when the first face is provided parallel to the second face and the bottom face. As a result, it is possible to reduce the brightness unevenness that occurs in the display component due to the protrusion of the optical element used for identifying the position of the leg of the optical element.
[2] In accordance with a preferred embodiment according to the optical element mentioned above, the first face is inclined to be closer to the second face as a distance from a center of the emission component increases. With this configuration, the amount of light heading toward the outside of the optical element from the first face, as seen from the display component side, can be increased. As a result, the brightness unevenness at the display component that is caused by the protrusion of the optical element used for identifying the position of the leg of the optical element can be further reduced.
[3] In accordance with a preferred embodiment according to any one of the optical elements mentioned above, the first face is inclined to be closer to the second face as a distance from a center of the emission component decreases.
[4] In accordance with a preferred embodiment according to any one of the optical elements mentioned above, a boundary between the top face and the first face has a continuous curved shape. With this configuration, no corners are formed at the boundary between the top face of the emission component and the first face of the protrusions. Thus, the brightness unevenness at the display component that is caused by the boundary between the top face of the emission component and the first face of the protrusions can be reduced.
[5] In accordance with a preferred embodiment according to any one of the optical elements mentioned above, the first face has a continuous curved shape that curves in a convex manner toward the second face. With this configuration, the first face of the protrusion having a curved shape will prevent the generation of parallel light headed toward the display component. Thus, the light can be better diffused toward the display component. As a result, the brightness unevenness at the display component that is caused by the protrusion of the optical element used for identifying the position of the leg of the optical element can be further reduced.
[6] In accordance with a preferred embodiment according to any one of the optical elements mentioned above, the first face is linearly inclined at a specific angle relative to the second face. With this configuration, the first face of the protrusion is formed by a face that is linearly inclined at the specific angle to the second face and the bottom face. Thus, the protrusion can be formed more easily. Also, the brightness unevenness at the display component that is caused by the protrusion of the optical element used for identifying the position of the leg of the optical element can be further reduced.
[7] In accordance with a preferred embodiment according to any one of the optical elements mentioned above, the first face has fine texturing. With this configuration, light can be better diffused toward the display component by the fine texturing. As a result, the brightness unevenness at the display component that is caused by the protrusion of the optical element used for identifying the positions of the leg of the optical element can be further reduced.
[8] In accordance with a preferred embodiment according to any one of the optical elements mentioned above, the first face is inclined at an angle of less than 90° relative to a center axis of the emission component.
   With this optical element, the first face is inclined at an angle of less than 90° to the center axis (e.g., optical axis) of the emission component. Consequently, when the optical element (e.g., diffusing lens) is disposed so that the optical axis is perpendicular to the display component, since the first face of the protrusion is disposed at an angle to the display component, light can be diffused obliquely to the display component. Also, the amount of light heading directly over the optical element can be reduced.
[9] In accordance with a preferred embodiment according to any one of the optical elements mentioned above, a distance between the first face and the second face in an axial direction of the emission component at a predetermined radial position is greater than the distance between the first face and the second face at a radial position that is farther from a center of the emission component than the predetermined radial position.
[10] In accordance with a preferred embodiment according to any one of the optical elements mentioned above, a distance between the first face and the bottom face in an axial direction of the emission component at a predetermined radial position is greater than the distance between the first face and the bottom face at a radial position that is farther from a center of the emission component than the predetermined radial position.
[11] In accordance with a preferred embodiment according to any one of the optical elements mentioned above, a distance between the first face and the second face in an axial direction of the emission component at a predetermined radial position is greater than the distance between the first face and the second face at a radial position that is closer to a center of the emission component than the predetermined radial position.
[12] In accordance with a preferred embodiment according to any one of the optical elemnets mentioned above, a distance between the first face and the bottom face in an axial direction of the emission component at a predetermined radial position is greater than the distance between the first face and the bottom face at a radial position that is closer to a center of the emission component than the predetermined radial position.
   In view of the state of the known technology and in accordance with an aspect of the present invention, an optical element comprises an emission component, a protrusion, and a leg. The emission component has a bottom face on which light is incident, and a top face from which the incident light is emitted. The protrusion protrudes outward in a radial direction of the emission component, and has a first face on a top face side and a second face on a bottom face side. The leg is provided to at least one of the second face and the bottom face. The first face is inclined at an angle of less than 90° relative to a center axis of the emission component.
   With this optical element, the first face is inclined at an angle of less than 90° to the center axis (e.g., optical axis) of the emission component. Consequently, when the optical element is disposed so that the optical axis is perpendicular to the display component, since the first face of the protrusion is disposed at an angle to the display component, light can be diffused obliquely to the display component, and the amount of light heading directly over the optical element can be reduced.
   In accordance with a preferred embodiment according to any one of the display devices mentioned above, the display device further comprises at least one optical member (e.g., at least one optical sheet) that is disposed between the optical element (e.g., diffusing lens) and the display component. A plurality of the optical elements (diffusing lenses) are provided, and are disposed at positions such that the light diffused at the protrusions of adjacent optical elements (diffusing lenses) intersect more on the optical element (diffusing lens) side than the optical member. With this configuration, light from the protrusions can be emitted at the optical member (optical sheet) without any gaps between the optical elements (diffusing lenses). Thus, brightness unevenness at the display component can be further reduced.
   With the present invention, as discussed above, there are provided an optical element (e.g., diffusing lens) and a display device with which there is less brightness unevenness at the display component due to a protrusion of the optical element that is used to identify the position of the leg of the optical element.
[13] In view of the state of the known technology, a display device comprises a display component, a light emitting element, and any one of the optical elements mentioned above (e.g., a diffusing lens). The light emitting element is configured to emit light to the display component. The optical element is configured to refract the light. The optical element includes an emission component, a protrusion, and a leg. The emission component has a bottom face on which the light from the light emitting element is incident, and a top face from which the incident light is emitted. The protrusion protrudes outward in a radial direction of the emission component, and has a first face on a top face side and a second face on a bottom face side. The leg is provided to at least one of the second face and the bottom face. The first face is inclined relative to the second face.
   With this display device, the first face on the top face side of the protrusion (the side where light is emitted) is inclined relative to the second face and/or the bottom face. Consequently, compared to when the first face is provided parallel to the second face and the bottom face, when light from the light emitting element has passed through the first face, the amount of light heading in a direction that is inclined to the display component can be increased, and the amount of light heading directly over the first face (in a direction perpendicular to the display component) can be reduced. Therefore, light can be emitted over a wider region (surface area) of the display component (the light can be more diffused) than when the first face is provided parallel to the second face and the bottom face. As a result, it is possible to reduce the brightness unevenness that occurs in the display component due to the protrusion of the optical element used for identifying the position of the leg of the optical element.
[14] In accordance with a preferred embodiment according to the display device mentioned above, the first face is inclined to be closer to the second face as a distance from a center of the emission component increases. With this configuration, the amount of light heading toward the outside of the optical element from the first face, as seen from the display component side, can be increased. As a result, the brightness unevenness at the display component that is caused by the protrusion of the optical element used for identifying the position of the leg of the optical element can be further reduced.
   In accordance with a preferred embodiment according to any one of the display devices mentioned above, a distance between the first face and the second face in an axial direction of the emission component at a predetermined radial position is greater than the distance between the first face and the second face at a radial position that is farther from a center of the emission component than the predetermined radial position.
   In accordance with a preferred embodiment according to any one of the display devices mentioned above, a distance between the first face and the bottom face in an axial direction of the emission component at a predetermined radial position is greater than the distance between the first face and the bottom face at a radial position that is farther from a center of the emission component than the predetermined radial position.
[15] In accordance with a preferred embodiment according to any one of the display devices mentioned above, the first face is inclined to be closer to the second face as a distance from a center of the emission component decreases.
   In accordance with a preferred embodiment according to any one of the display devices mentioned above, a distance between the first face and the second face in an axial direction of the emission component at a predetermined radial position is greater than the distance between the first face and the second face at a radial position that is closer to a center of the emission component than the predetermined radial position.
   In accordance with a preferred embodiment according to any one of the display devices mentioned above, a distance between the first face and the bottom face in an axial direction of the emission component at a predetermined radial position is greater than the distance between the first face and the bottom face at a radial position that is closer to a center of the emission component than the predetermined radial position.
[16] In accordance with a preferred embodiment according to any one of the display devices mentioned above, a boundary between the top face and the first face has a continuous curved shape. With this configuration, no corners are formed at the boundary between the top face of the emission component and the first face of the protrusions. Thus, the brightness unevenness at the display component that is caused by the boundary between the top face of the emission component and the first face of the protrusions can be reduced.
[17] In accordance with a preferred embodiment according to any one of the display devices mentioned above, the first face has a continuous curved shape that curves in a convex manner toward the second face. With this configuration, the first face of the protrusion having a curved shape will prevent the generation of parallel light headed toward the display component. Thus, the light can be better diffused toward the display component. As a result, the brightness unevenness at the display component that is caused by the protrusion of the optical element used for identifying the position of the leg of the optical element can be further reduced.
[18] In accordance with a preferred embodiment according to any one of the display devices mentioned above, the first face is linearly inclined at a specific angle relative to the second face. With this configuration, the first face of the protrusion is formed by a face that is linearly inclined at the specific angle to the second face and the bottom face. Thus, the protrusion can be formed more easily. Also, the brightness unevenness at the display component that is caused by the protrusion of the optical element used for identifying the position of the leg of the optical element can be further reduced.
[19] In accordance with a preferred embodiment according to any one of the display devices mentioned above, the first face is inclined at an angle of less than 90° relative to a center axis of the emission component.

With this display device, the first face is inclined at an angle of less than 90° to the center axis (e.g., optical axis) of the emission component. Consequently, when the optical element (e.g., diffusing lens) is disposed so that the optical axis is perpendicular to the display component, since the first face of the protrusion is disposed at an angle to the display component, light can be diffused obliquely to the display component. Also, the amount of light heading directly over the optical element can be reduced.

### BRIEF DESCRIPTION OF THE DRAWINGS

Referring now to the attached drawings which form a part of this original disclosure:
FIG. 1 is a front perspective view of the overall configuration of a liquid crystal television set in accordance with a first embodiment;
FIG. 2 is an exploded perspective view of the liquid crystal television set in accordance with the first embodiment;
FIG. 3 is a partial cross sectional view of the liquid crystal television set, taken along III-III line in FIG. 1;
FIG. 4 is a front perspective view of a diffusing lens in the liquid crystal television set in accordance with the first embodiment;
FIG. 5 is a side view of the diffusing lens in the liquid crystal television set in accordance with the first embodiment;
FIG. 6 is a detailed side view of the diffusing lens in the liquid crystal television set in accordance with the first embodiment;
FIG. 7 is a bottom plan view of the diffusing lens in the liquid crystal television set in accordance with the first embodiment;
FIG. 8 is a partial cross sectional view of the liquid crystal television set, illustrating a first path of light emitted from an LED in accordance with the first embodiment;
FIG. 9 is a partial cross sectional view of the liquid crystal television set, illustrating a second path of the light emitted from the LED in accordance with the first embodiment;
FIG. 10 is a partial cross sectional view of the liquid crystal television set, illustrating a third path of the light emitted from the LED in accordance with the first embodiment;
FIG. 11 is a partial cross sectional view of the liquid crystal television set, illustrating a first path of light emitted from an LED in accordance with a first modification example of the first embodiment;
FIG. 12 is a partial cross sectional view of the liquid crystal television set, illustrating a second path of the light emitted from the LED in accordance with the first modification example of the first embodiment;
FIG. 13 is a partial cross sectional view of the liquid crystal television set, illustrating a third path of the light emitted from the LED in accordance with the first modification example of the first embodiment;
FIG. 14 is a front perspective view of a diffusing lens in a liquid crystal television set in accordance with a second embodiment;
FIG. 15 is a side view of the diffusing lens in the liquid crystal television set in accordance with the second embodiment;
FIG. 16 is a front perspective view of a diffusing lens in a liquid crystal television set in accordance with a third embodiment;
FIG. 17 is a side view of a diffusing lens in a liquid crystal television set in accordance with a first modification example of the second embodiment; and
FIG. 18 is a side view of a diffusing lens in a liquid crystal television set in accordance with a second modification example of the second embodiment.

### DETAILED DESCRIPTION OF EMBODIMENTS

Selected embodiments will now be explained with reference to the drawings. It will be apparent to those skilled in the art from this disclosure that the following descriptions of the embodiments are provided for illustration only and not for the purpose of limiting the invention as defined by the appended claims.

### FIRST EMBODIMENT

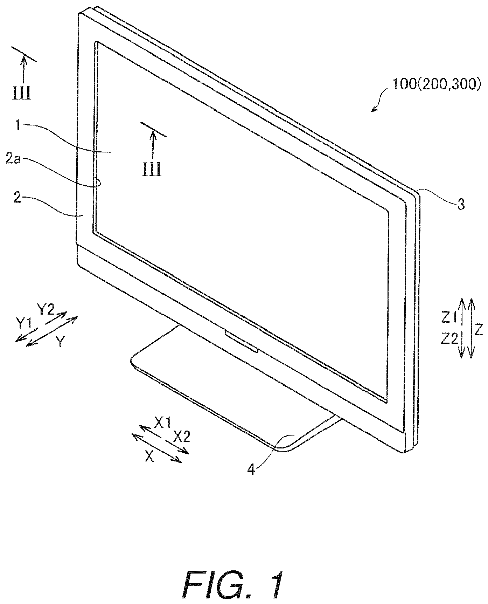

First, the configuration of a liquid crystal television set 100 in accordance with the first embodiment will now be described through reference to FIGS. 1 to 10. The liquid crystal television set 100 is an example of the "display device" in the present disclosure.

As shown in FIG. 1, the liquid crystal television set 100 in accordance with the first embodiment comprises a display component 1, a front housing 2, a rear frame 3, and a stand member 4 that supports the entire liquid crystal television set 100.

In the following description, the forward and backward direction (the front and rear direction) of the liquid crystal television set 100 when the liquid crystal television set 100 is installed in an upright position is termed the Y direction (Y1 direction and Y2 direction), and the up and down direction is termed the Z direction (Z1 direction and Z2 direction). The left and right direction that is perpendicular to the forward and backward direction (Y direction) and the up and down direction (Z direction) is termed the X direction (X1 direction and X2 direction).

The display component 1 is formed from liquid crystal cells that display video on the front face (the face on the Y1 direction side). The display component 1 has a rectangular shape that extends in the left and right direction (X direction) and the up and down direction (Z direction).

The front housing 2 supports the display component 1 from the rear (the Y2 direction side). An opening 2a for exposing the display component 1 at the front (in the Y1 direction) is provided to the front housing 2. The front housing 2 is molded from plastic, or formed by any suitable manner as needed and/or desired.

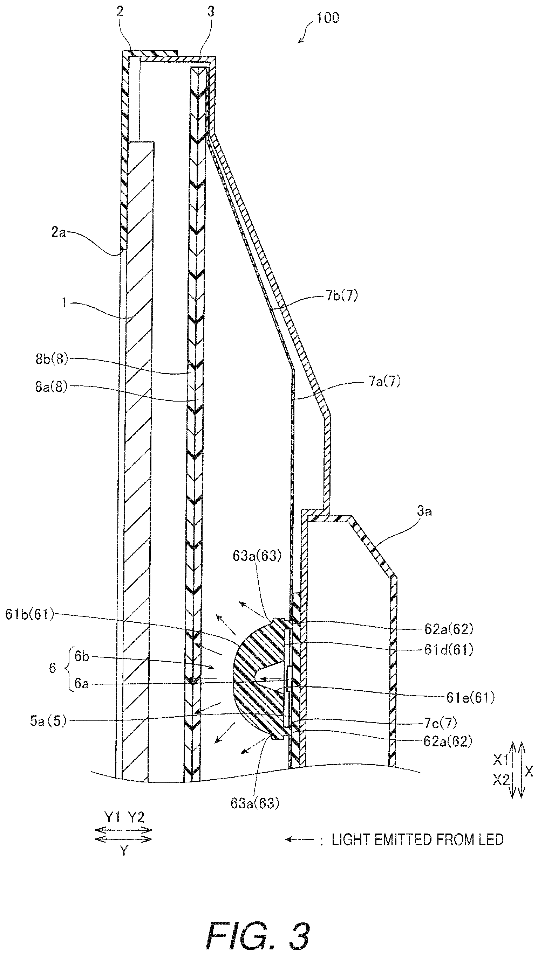

The rear frame 3 is disposed on the rear face side of the display component 1 (the Y2 direction side). The rear frame 3 is formed in a concave shape that is recessed to the rear (Y2 direction). Also, the rear frame 3 is attached to the front housing 2. The rear frame 3 is formed from metal, or any suitable material as needed and/or desired. Also, the rear frame 3 is provided with a cover member 3a (see FIG. 3) that is attached from the rear (Y2 direction) so as to cover a power supply board, signal processing board, or any of various other boards (not shown) that are installed in the rear frame 3. The rear frame 3 and the cover member 3a form a rear housing of the liquid crystal television set 100 that corresponds to the front housing 2.

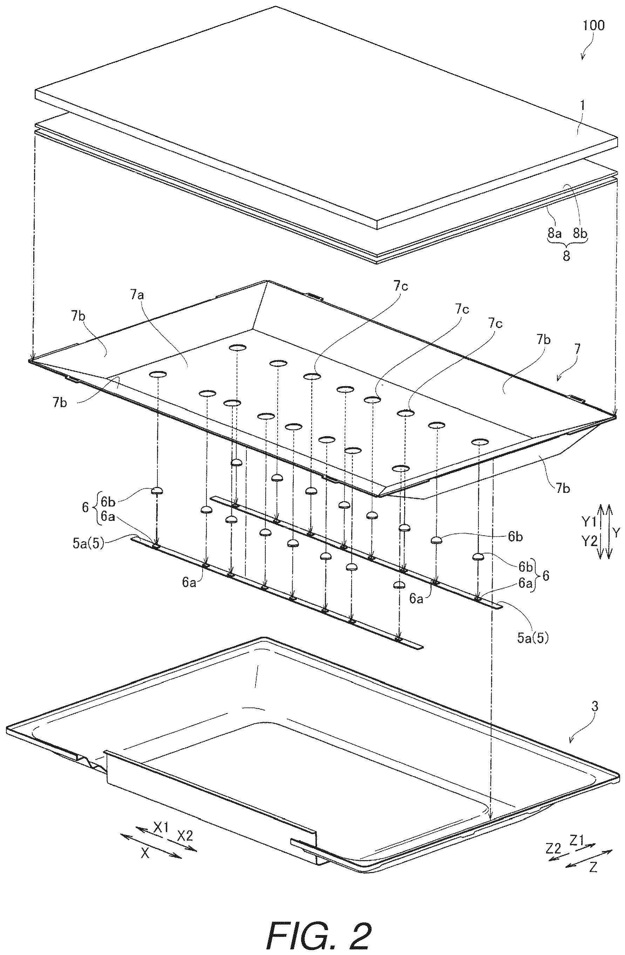

As shown in FIG. 2, the liquid crystal television set 100 further comprises LED (light emitting diode) boards 5, light sources 6, a reflective sheet 7, and an optical sheet 8 between the front housing (see FIG. 1) and the rear frame 3 (inside thereof). In FIG. 2, for the sake of clear description, the front housing 2 and the stand member 4 are omitted.

The LED boards 5 are each formed in the shape of a slender board extending in the left and right direction (X direction). Two of the LED boards 5 are provided. The two LED boards 5 are installed parallel to each other and spaced a specific distance apart in the up and down direction (Z direction), on a front surface on the front side (Y1 direction side) of the rear frame 3. The LED boards 5 are configured such that the light sources 6 are mounted on mounting faces 5a of the LED boards 5 on the front side (Y1 direction side). The mounting faces 5a are arranged parallel to the display component 1.

The light sources 6 each include an LED 6a and a diffusing lens 6b (e.g., an optical element). The LEDs 6a are an example of the "light emitting element" in the present disclosure.

The LEDs 6a are configured to emit light to the display component 1 (see FIG. 1). Also, eight of the LEDs 6a are mounted in a row in the left and right direction (X direction), spaced apart, on the mounting face 5a (the front face) of each of the two LED boards 5. The LEDs 6a are disposed on the rear face side (Y2 direction side) relative to the display component 1. Therefore, the liquid crystal television set 100 is formed as a directly backlit type of liquid crystal television set 100.

The diffusing lenses 6b are provided so as to cover the LEDs 6a mounted on the LED boards 5. The diffusing lenses 6b is configured to control the distribution of the light. The diffusing lenses 6b are adhesively bonded to the LED boards 5 so as to be illuminated by the light from the LEDs 6a. The diffusing lenses 6b are bonded to the LED boards 5 with adhesive. Also, one diffusing lens 6b is provided for each of the LEDs 6a. The diffusing lenses 6b are made from acrylic or another such plastic. Of course the diffusing lenses 6b can be made from any suitable material conventionally used as a diffusing lens in the art. The diffusing lenses 6b are configured to diffuse light from the LEDs 6a toward the display component 1. The diffusing lenses 6b are adhesively bonded to the LED boards 5 with a mounting machine (not shown). The detailed configuration of the diffusing lenses 6b will be discussed below.

The reflective sheet 7 is formed from PET (polyethylene terephthalate) or another such plastic that is suitable for reflective sheets. The reflective sheet 7 is disposed along the face of the rear frame 3 on the display component 1 side, in between the rear frame 3 and the optical sheet 8. The reflective sheet 7 is configured to reflect light toward the display component 1 side.

The reflective sheet 7 includes a bottom face part 7a and four inclined part 7b. The bottom face part 7a has a rectangular shape that extends in the left and right direction (X direction) and the up and down direction (Z direction). The inclined parts 7b are disposed so as to surround the four sides of the bottom face part 7a. Therefore, the bottom face part 7a is parallel to the mounting faces 5a of the LED boards 5 and the display component 1. The bottom face part 7a also has a plurality of (sixteen in FIG. 2) holes 7c for passing the light sources 6 through to the front (in the Y1 direction). More precisely, a total of sixteen of the holes 7c are provided at positions corresponding to the positions on the bottom face part 7a where the light sources 6 (the LEDs 6a and the diffusing lenses 6b) are disposed. As shown in FIG. 3, with these holes 7c, the reflective sheet 7 is configured so that the light sources 6 (the LEDs 6a and the diffusing lenses 6b) can be disposed (exposed) more on the display component 1 side (front side) than the reflective sheet 7 in a state in which the LED boards 5 have been attached to the rear frame 3.

As shown in FIG. 2, the optical sheet 8 is disposed between the diffusing lenses 6b and the display component 1. The optical sheet 8 includes a diffusing sheet 8a and a polarizing filter 8b. The optical sheet 8 can further includes a sheet other than the diffusing sheet 8a and the polarizing filter 8b, as needed and/or desired. The optical sheet 8 has a rectangular, flat shape in which the forward and backward direction (Y direction) is the thickness direction. Therefore, the optical sheet 8 is parallel to the display component 1 (see FIG. 1) and to the mounting faces 5a of the LED boards 5 and the bottom face part 7a of the reflective sheet 7. The diffusing sheet 8a and the polarizing filter 8b are examples of the "optical member" in the present disclosure.

The diffusing sheet 8a is molded from plastic or the like. The diffusing sheet 8a is disposed between the display component 1 and the light sources 6. Also, the diffusing sheet 8a is configured to diffuse light from the light sources 6 toward the display component 1. The polarizing filter 8b is formed in substantially the same size as the diffusing sheet 8a. The polarizing filter 8b is disposed between the diffusing sheet 8a and the display component 1. The polarizing filter 8b is configured to align the polarization direction of light transmitted by the diffusing sheet 8a, and emit it to the display component 1.

### Detailed Configuration of Diffusing Lenses

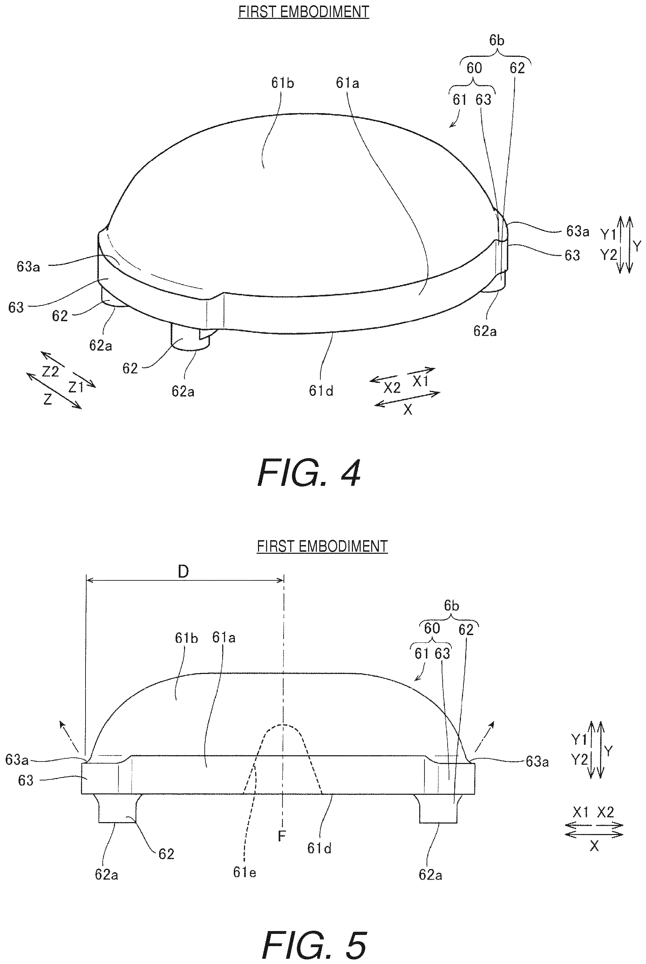

The detailed configuration of the diffusing lenses 6b will now be described through reference to FIGS. 4 to 13.

As shown in FIGS. 4 and 5, the diffusing lenses 6b each include a main body 61, at least one fixing part 62, and at least one protrusion 63. The main body 61 is an example of the "emission component" in the present disclosure. The fixing parts 62 are an example of the "legs" in the present disclosure.

The main body 61 is provided at the front (Y1 direction) of the LEDs 6a so as to cover the LED 6a from the front (see FIG. 3). The main body 61 is circular in plan view (seen from the display component 1 side). The main body 61 is formed in an overall dome shape. Also, the main body 61 has a side face 61 a and a top face 61 b. The side face 61 a is disposed on the front side (Y1 direction) of the diffusing lens 6b and has an annular shape that extends in the forward and backward direction (Y direction). The top face 61 b is dome-shaped and is connected to the front end of the side face 61 a. The top face 61 b is in the form of a smooth, curved surface. The top face 61 b is formed in a convex shape that faces the display component 1. The main body 61 emits incident light from the side face 61 a and the top face 61 b.

The main body 61 also has a bottom face 61 d and a concave part 61 e. The light is incident on the bottom face 61 a on the rear side (the Y2 direction side) of the main body 61. The concave part 61 e is recessed forward from the center of the bottom face 61 d. The bottom face 61 d is formed in flat, and is disposed parallel to the mounting faces 5a and opposite the mounting face 5a of the LED board 5. Therefore, the bottom face 61 d is parallel to the display component 1. The concave part 61e is in the form of a curved surface. Also, the concave part 61 e is disposed at the front (Y1 direction) of the LED 6a so as to be opposite the LED 6a. The concave part 61e is also configured so as to be illuminated with substantially all of the light emitted from the LED 6a, and so that the light will go into the diffusing lens 6b. Thus, in the illustrated embodiment, the main body 61 has the bottom face 61 d on which the light from the LED 6a is incident, and the top face 61 b from which the incident light is emitted.

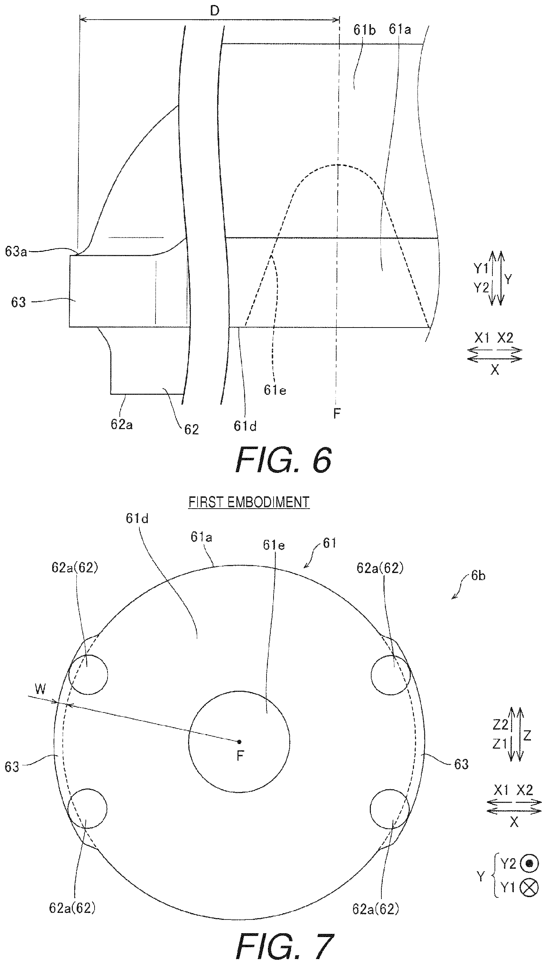

The fixing parts 62 are provided on the bottom face 61 d side of the main body 61. More precisely, as shown in FIG. 7, two pairs of the fixing parts 62 (for a total of four) are provided, one pair to the end of the bottom face 61 d of the main body 61 in the left direction (X1 direction) and one to the end in the right direction (X2 direction). As shown in FIG. 3, the fixing parts 62 are substantially in the form of a circular cylinder extending in the forward and backward direction (Y direction). The length of the fixing parts 62 in the forward and backward direction is greater than the thickness of the LED 6a. As shown in FIG. 7, the fixing parts 62 also have bonding faces 62a that are adhesively bonded to the LED board 5 at the rear (Y2 direction) end.

As shown in FIG. 5, two of the protrusions 63 are provided. The two protrusions 63 protrude outward in the radial direction of the main body 61 (the X1 direction and X2 direction, which are parallel to the bottom face 61 d) from the side face 61 a of the main body 61. Also, the protrusions 63 are formed so as to protrude from the side face 61 a, so that the width W (see FIG. 4) will be constant in the radial direction of the main body 61. Also, the two protrusions 63 have the function of identifying the positions of the pairs (2 x 2) of fixing parts 62 (e.g., legs). More precisely, when the diffusing lenses 6b are mounted to the LED boards 5 by a mounting machine (not shown), the protrusions 63 are configured so that the positions of the protrusions 63 are recognized by the machine and the machine can identify which position of the diffusing lenses 6b the fixing parts 62 are in. As shown in FIG. 7, the fixing parts 62 are provided near the upper ends (Z1 direction) of the protrusions 63 and near the lower ends (Z2 direction). The mounting machine has this disposition information about the fixing parts 62 with respect to the protrusions 63. Thus, the mounting machine can identify where the fixing parts 62 are located relative to the protrusions 63.

As shown in FIG. 5, the protrusions 63 each have a first face 63a on the top face 61 b side, and a second face on the bottom face 61 d side (the bottom face 61 d of the main body 61 and the second faces of the protrusions 63 form a flat surface and lie in the same plane. The entire surface of the first faces 63a is inclined relative to the bottom face 61 d. More precisely, the first faces 63a of the protrusions 63 are formed as a continuous curved surface. Also, the first faces 63a of the protrusions 63 are formed curving in a convex shape toward the bottom face 61 d. This curved surface shape may be a spherical lens shape or an aspherical lens shape. Also, the first faces 63a of the protrusions 63 are inclined relative to a plane that is perpendicular to the optical axis F (center line or axis) of the main body 61 (such as a face on the Y2 direction side of the optical sheet 8 (see FIG. 3)). Thus, in the illustrated embodiment, the protrusions 63 protrude outward in the radial direction of the main body 61. The protrusions 63 each have the first face 63a on the top face 61 b side and the second face on the bottom face 61 d side. The fixing parts 62 (e.g., legs) are provided at least one of the second face and the bottom face 61 d. Specifically, as illustrated in FIG. 7, the fixing parts 62 are arranged at locations that overlap with both the protrusions 63 and the bottom face 61 d of the main body 61 as viewed in the Y direction from the rear of the diffusing lens 6b. Specifically, the fixing parts 62 are provided on second faces of the protrusions 63 and the bottom faces 61 d. The first face 63a is inclined relative to at least one of the second face and the bottom face 61 d.

Also, the first faces 63a of the protrusions 63 (the faces of the protrusions 63 on the display component 1 side) are inclined relative to the second faces and/or the bottom face 61 d. In the illustrated embodiment, the first faces 63a are inclined so as to be closer to the bottom face 61 d as the distance from the LED 6a increases. Specifically, in the plan view (seen from the Y1 direction side), the first faces 63a of the protrusions 63 are inclined to the rear (the Y2 direction) as the distance D from the center of the main body 61 increases. Also, the first faces 63a are inclined at an angle of less than 90° relative to the optical axis F (the center line or axis) of the main body 61. In other words, the first faces 63a is configured not to be perpendicular to the optical axis F (the center line or axis).

The top face 61 b of the main body 61 and the first faces 63a of the protrusions 63 are smoothly connected. That is, the boundary portion between the top face 61 b of the main body 61 and the first faces 63a of the protrusions 63 is formed as a continuous curved surface. In other words, there is no corner at the boundary portion between the top face 61 b of the main body 61 and the first faces 63a of the protrusions 63, and these components are smoothly connected in a rounded (curved surface) shape.

### Path of Light

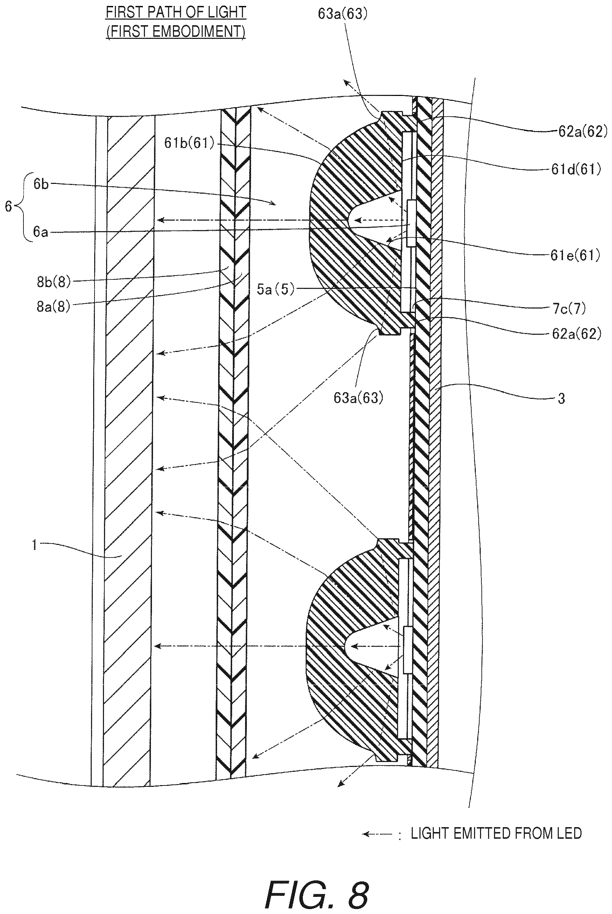

The first path of the light emitted from the LEDs 6a will now be described through reference to FIG. 8. This first path is the path of light that is refracted at the top face 61 b and heads toward the display component 1 side.

The light emitted from the LEDs 6a goes from the concave parts 61e into the interior of the diffusing lenses 6b. Most of the light is then emitted from the top faces 61 b of the main bodies 61 toward the display component 1 and to the outside of the diffusing lenses 6b. Part of the light that goes into the diffusing lenses 6b is emitted from the protrusions 63 to the outside of the diffusing lenses 6b. At this point, since the first faces 63a of the protrusions 63 are inclined to the bottom faces 61 d of the main bodies 61, which are parallel to the display component 1, the light is not emitted toward the display component 1 directly over the first faces 63a (in a direction perpendicular to the display component 1 (forward)), and is instead emitted in a direction that is inclined to the display component 1. Here, a plurality of the diffusing lenses 6b are connected on an LED board 5, and are disposed at positions such that the light diffused at the protrusions 63 of adjacent diffusing lenses 6b intersect at positions more on the diffusing lens 6b side (the Y2 direction side) than the optical sheet 8.

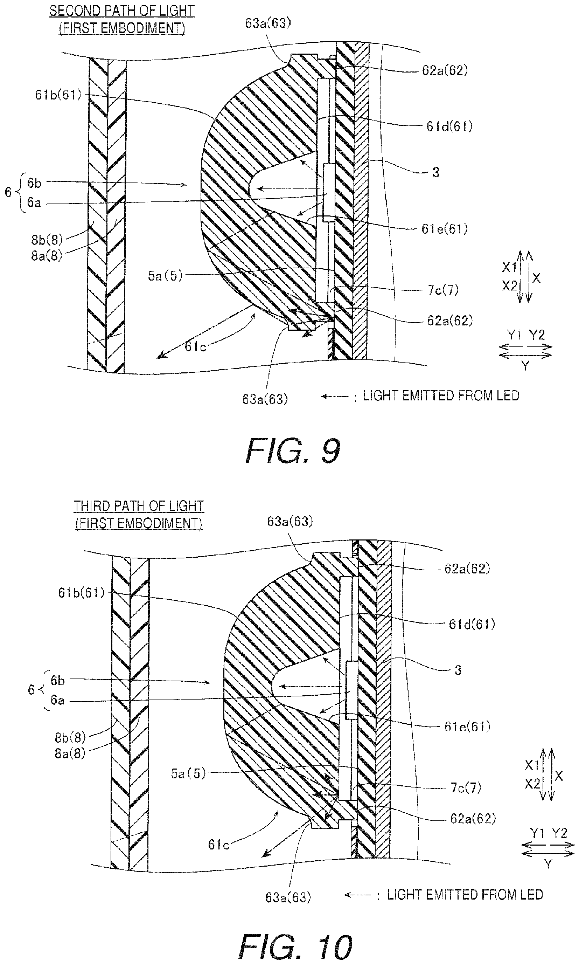

Second and third paths of the light emitted from the LEDs 6a will now be described through reference to FIGS. 9 and 10. The second and third paths are the paths of light that is reflected on the top face 61 b side and then heads toward the opposite side from the display component 1 (to the rear side).

The second path shown in FIG. 9 will be described. The light emitted from the LED 6a goes from the concave part 61e into the interior of the diffusing lens 6b. The light is then reflected from the top face 61 b to the opposite side from the display component 1 (the rear side). This light that is heading to the rear is then reflected by the bonding faces 62a. Here, the light is reflected so as to spread out in a plurality of directions on the display component 1 side. Part of this light then reaches the first faces 63a of the protrusions 63 and is refracted, and is emitted to the outside of the diffusing lens 6b. The refracted light is then reflected again by the top face 61 b and heads to the display component 1 side.

The third path shown in FIG. 10 will be described. The light emitted from the LED 6a goes from the concave part 61e into the interior of the diffusing lens 6b. The light is then reflected from the top face 61 b to the opposite side from the display component 1 (the rear side). This light that is heading to the rear is then reflected by the bottom face 61 d. Here, the light is reflected so as to spread out in a plurality of directions on the display component 1 side. Part of this light then reaches the first faces 63a of the protrusions 63 and is refracted, and is emitted to the outside of the diffusing lens 6b. The refracted light heads away from the diffusing lens 6b and toward the display component 1 side.

### Mounting of Diffusing Lenses

The mounting of the diffusing lenses 6b on the LED boards 5 by a mounting machine will now be described.

This mounting machine (not shown) comprises a dispenser for applying an adhesive agent, a camera sensor for acquiring information about the layout (position, angle, etc.) of the diffusing lenses 6b, and an arm for grasping the diffusing lenses 6b.

In the illustrated embodiment, eight of the LEDs 6a are mounted on one LED board 5 (mounting face 5a). In this state, the dispenser applies the adhesive agent over the mounting face 5a near each of the LEDs 6a (on the X1 direction side and the X2 direction side). The camera sensor then acquires the positions of the protrusions 63 of the diffusing lenses 6b. The mounting machine also acquires the positions of the fixing parts 62 based on the positions of the protrusions 63. The arm then grasps the diffusing lenses 6b, and mounting is performed so that the diffusing lenses 6b cover the LEDs 6a on the LED board 5.

### Effect of First Embodiment

The following effect can be obtained with the first embodiment.

In the first embodiment, as discussed above, the first faces 63a on the top face 61 b of the protrusions 63 are inclined to the bottom face 61 d. Consequently, compared to when the first faces 63a are provided parallel to the bottom face 61 d, when light from the LEDs 6a has passed through the first faces 63a, more of the light will be heading in a direction that is inclined to the display component 1, and less of the light will be heading directly over the first faces 63a (in a direction perpendicular to the display component 1). Therefore, light can be emitted over a wider region (surface area) of the display component 1 (the light can be more diffused) than when the first faces 63a are provided parallel to the bottom face 61 d. As a result, it is possible to reduce the brightness unevenness in light that occurs in the display component 1 due to the protrusions 63 of the diffusing lenses 6b used for identifying the positions of the fixing parts 62 (e.g., legs) of the diffusing lenses 6b (or used for positioning the fixing parts 62).

Also, in the first embodiment, as discussed above, the first faces 63a of the protrusions 63 are inclined to be closer to at least one of the second faces and the bottom face 61 d as the distance D from the LED 6a or the center of the main body 61 increases. Consequently, the amount of light heading toward the outside of the diffusing lenses 6b from the first faces 63a, as seen from the display component 1 side, can be increased. As a result, the brightness unevenness at the display component 1 that is caused by the protrusions 63 of the diffusing lenses 6b used for identifying the positions of the fixing parts 62 of the diffusing lenses 6b can be further reduced.

Specifically, as shown in FIG. 6, the thickness of the protrusion 63 in the Y direction monotonically and gradually decreases as moving radially outward relative to the optical axis F. Thus, in the first embodiment, with respect to any predetermined radial positions on the first face 63a, a distance between the first face 63a and the second face in the Y direction (e.g., an axial direction along the optical axis F) of the main body 61 at a predetermined radial position is greater than the distance between the first face 63a and the second face at a radial position that is farther from the center of the main body 61 than the predetermined radial position. Also, in the first embodiment, as shown in FIG. 6, with respect to any predetermined radial positions on the first face 63a, a distance between the first face 63a and the bottom face 61 d in the Y direction of the main body 61 at a predetermined radial position is greater than the distance between the first face 63a and the bottom face 61 d at a radial position that is farther from the center of the main body 61 than the predetermined radial position.

Also, in the first embodiment, the boundary between the top face 61 b and the first faces 63a has a continuous curved shape. Specifically, as discussed above, the boundary portion between the top face 61 b of the main body 61 and the first faces 63a of the protrusions 63 is formed as a continuous curved surface. Consequently, since no corners are formed at the boundary portions between the top face 61 b of the main body 61 and the first faces 63a of the protrusions 63, the brightness unevenness at the display component 1 that is caused by the boundary portions between the top face 61 b of the main body 61 and the first faces 63a of the protrusions 63 can be reduced.

Also, in the first embodiment, as discussed above, the first faces 63a of the protrusions 63 has a continuous curved shape that curves in a convex manner toward the bottom face 61 d. Consequently, the first faces 63a of the protrusions 63 having a curved surface will prevent the generation of parallel light headed toward the display component 1. Thus, the light can be better diffused toward the display component 1. As a result, the brightness unevenness at the display component 1 that is caused by the protrusions 63 of the diffusing lenses 6b used for identifying the positions of the fixing parts 62 of the diffusing lenses 6b can be further reduced.

Also, in the first embodiment, as discussed above, the first faces 63a of the protrusions 63 are inclined to a plane that is perpendicular to the optical axis F (center line) of the main body 61. Consequently, when the diffusing lenses 6b are disposed so that the optical axis F (center line) is perpendicular to the display component 1, the first faces 63a of the protrusions 63 will be disposed at an angle to the display component 1. Thus, the light can be diffused obliquely to the display component 1. Also, the amount of light headed directly over the diffusing lenses 6b can be reduced.

Also, in the first embodiment, as discussed above, the optical sheet 8 is disposed between the diffusing lenses 6b and the display component 1. A plurality of the diffusing lenses 6b are provided. The diffusing lenses 6b are disposed at positions such that the light diffused at the protrusions 63 of adjacent diffusing lenses 6b intersect more on the diffusing lens 6b side than the optical sheet 8. Consequently, since light from the protrusions 63 can be emitted at the optical sheet 8 without any gaps between the diffusing lenses 6b, brightness unevenness at the display component 1 can be further reduced.

### First Modification Example of First Embodiment

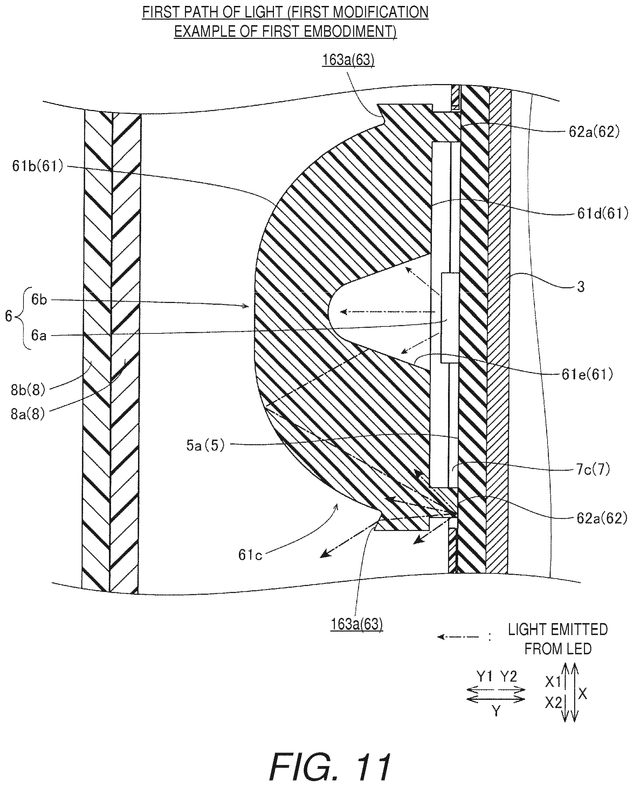

A first modification example of the first embodiment will now be described through reference to FIGS. 11 to 13. In the first embodiment described above, the first faces 63a of the protrusions 63 move closer to the bottom face 61 d as moving away (outward) from the concave part 61 e. In this first modification example of the first embodiment, the configuration is such that first faces 163a of the protrusions 63 move away from the bottom face 61 d as they move away from the concave part 61 e.

As shown in FIGS. 11 to 13, with the liquid crystal television set 100a in the first modification example of the first embodiment, the first faces 163a of the protrusions 63 move away from the bottom face 61 d as they move away from the concave part 61 e. That is, the first faces 163a of the protrusions 63 goes back toward the display component 1 side as moving outward. The liquid crystal television set 100a is an example of the "display device" in the present disclosure.

The first to third paths of the light emitted from the LEDs 6a will now be described. The first to third paths are the paths of light on which the light is reflected at the top face 61 b side, and then heads toward the opposite side from the display component 1 (the rear side).

The first path shown in FIG. 11 will be described. The light emitted from the LED 6a goes from the concave part 61e into the interior of the diffusing lens 6b. The light is then reflected from the top face 61 b to the opposite side from the display component 1 (the rear side). This light that is heading to the rear is then reflected by the bonding faces 62a. Here, the light is reflected so as to spread out in a plurality of directions on the display component 1 side. Part of this light then reaches the first faces 163a of the protrusions 63 and is refracted, and is emitted to the outside of the diffusing lens 6b. The refracted light then heads to the display component 1 side and in a direction away from the diffusing lens 6b.

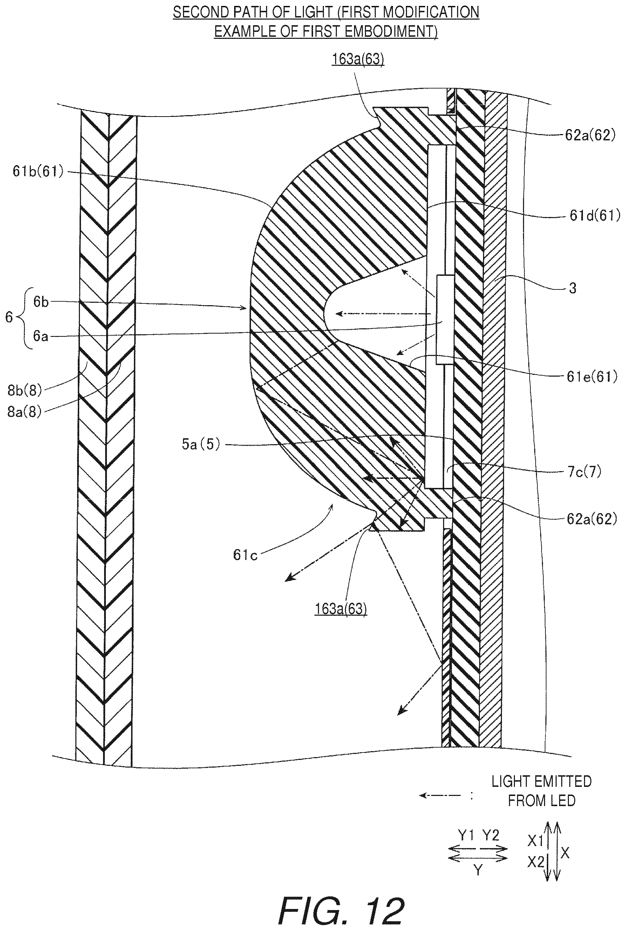

The second path shown in FIG. 12 will be described. The light emitted from the LED 6a goes from the concave part 61e into the interior of the diffusing lens 6b. The light is then reflected from the top face 61 b to the opposite side from the display component 1 (the rear side). This light that is heading to the rear is then reflected by the bottom face 61 d. Here, the light is reflected so as to spread out in a plurality of directions on the display component 1 side. Part of this light then reaches the first faces 163a of the protrusions 63 and is reflected, and is emitted to the outside of the diffusing lens 6b. The reflected light then heads back toward the rear side and is reflected by the reflective sheet 7 to the display component 1 side.

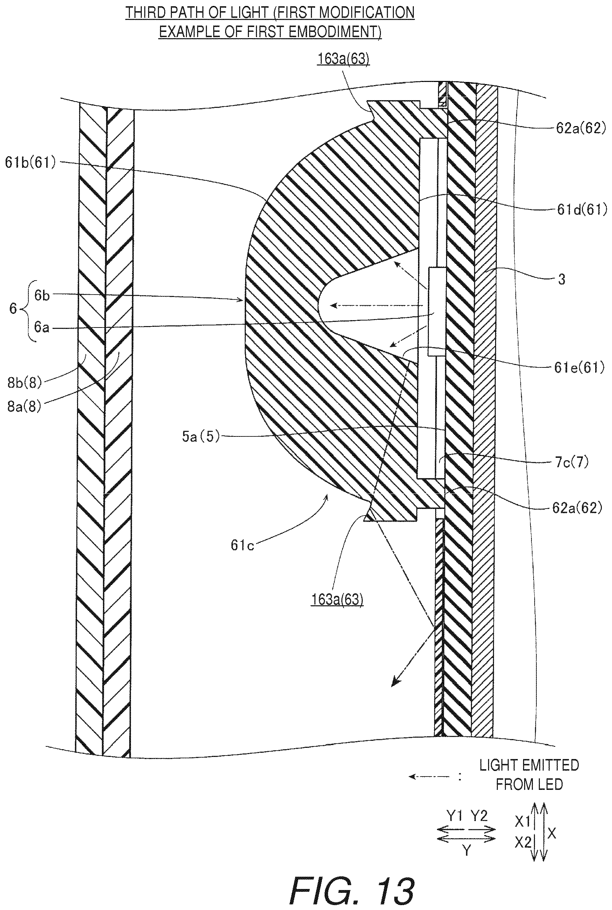

The third path shown in FIG. 13 will be described. The light emitted from the LED 6a goes from the concave part 61e into the interior of the diffusing lens 6b. The light then heads directly to the first faces 163a of the protrusions 63, is reflected at the first faces 163a, and is emitted to the outside of the diffusing lens 6b. This reflected light then heads back toward the rear side and is reflected by the reflective sheet 7 to the display component 1 side.

### Effect of First Modification Example of First Embodiment

The following effect can be obtained with the first modification example of the first embodiment.

With the first modification example of the first embodiment, the first faces 163a of the protrusions 63 move away from the bottom face 61 d as they move away from the concave part 61 e. Consequently, with the first faces 163a, compared to a configuration in which the first faces 63a of the protrusions 63 move closer to the bottom face 61 d as they move away from the concave part 61 e as in the first embodiment, light can be more easily reflected by the first faces 163a toward the opposite side from the display component 1 (the rear side). Thus, light can be diffused over a wider range.

With the first modification example of the first embodiment, the first faces 163a are inclined to be closer to at least one of the second faces and the bottom face 61 d as the distance from the center of the main body 61 decreases. Specifically, as shown in FIGS. 11 to 13, the thickness of the protrusions 63 in the Y direction monotonically and gradually increases as moving radially outward relative to the optical axis of the main body 61. Thus, with respect to any predetermined radial positions on the first face 163a, a distance between the first face 163a and the second face in the Y direction (e.g., an axial direction) of the main body 61 at a predetermined radial position is greater than the distance between the first face 163a and the second face at a radial position that is closer to the center of the main body 61 than the predetermined radial position. Also, with respect to any predetermined radial positions on the first face 163a, a distance between the first face 163a and the bottom face 61 d in the Y direction at a predetermined radial position is greater than the distance between the first face 163a and the bottom face 61 d at a radial position that is closer to the center of the main body than the predetermined radial position.

The rest of the configuration and effect of the first modification example of the first embodiment are the same as in the first embodiment.

### SECOND EMBODIMENT

A second embodiment will now be described through reference to FIGS. 1, 14, and 15. In the first embodiment described above, the first faces 63a of the protrusions 63 have a curved surface shape. In this second embodiment, first faces 263a of protrusions 263 are formed by faces that are linearly inclined at a specific angle to the bottom face 61 d. Those components that are the same as in the first embodiment above will be numbered the same as in the first embodiment and will not be described again.

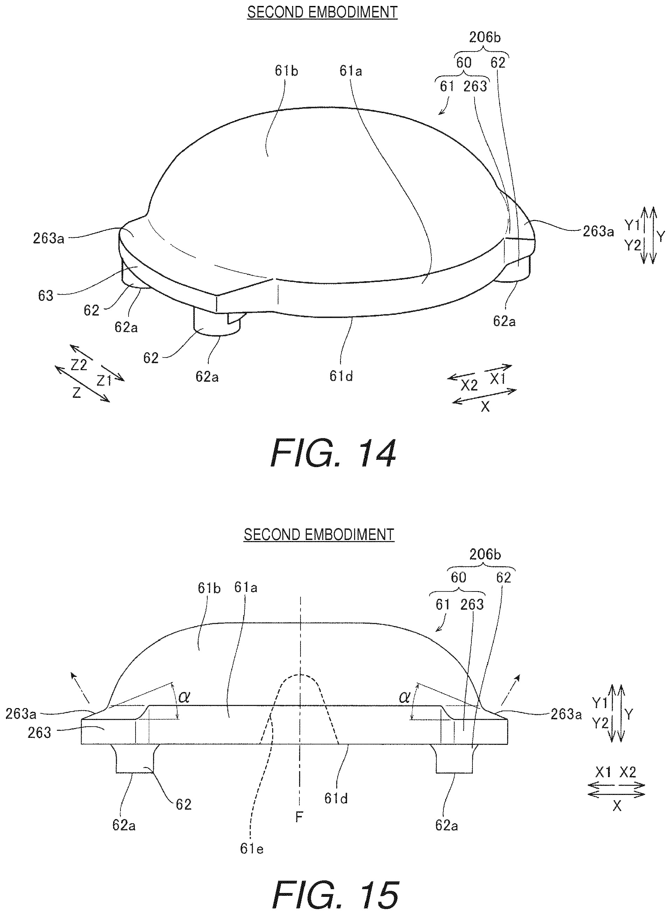

As shown in FIGS. 14 and 15, with the liquid crystal television set 200 in accordance with the second embodiment (see FIG. 1), the first faces 263a of the protrusions 263 of a diffusing lens 206b are formed by faces that are linearly inclined at a specific angle α (see FIG. 14) to the bottom face 61 d. Therefore, the first faces 263a are also linearly inclined at the specific angle α (see FIG. 14) to the display component 1. In other words, the cross section of the first faces 263a of the protrusions 263 taken along a plane including the optical axis F has a straight line inclined relative to the optical axis F. The liquid crystal television set 200 is an example of the "display device" in the present disclosure. Also, the specific angle α can be less than 90°, more preferably more than 0 degree and less than 45 degree, or any other angle as needed and/or desired.

### Effect of Second Embodiment

The following effect can be obtained with the second embodiment.

With the second embodiment, just as with the first embodiment above, the first faces 263a on the top face 61 b side of the protrusions 263 are inclined to the bottom face 61 d. Consequently, brightness unevenness at the display component 1 due to the protrusions 263 of the diffusing lens 206b that is used to identify the positions of the fixing parts 62 of the diffusing lens 206b can be reduced.

Also, with the second embodiment, the first faces 263a are linearly inclined at a specific angle relative to at least one of the second surface and the bottom face 61 d. Specifically, as discussed above, the first faces 263a of the protrusions 263 are formed by faces that are linearly inclined at a specific angle to the bottom face 61 d. Consequently, since the first faces 263a of the protrusions 263 are formed by faces that are linearly inclined at a specific angle, the protrusions 263 can be formed more easily, and brightness unevenness at the display component 1 due to the protrusions 263 of the diffusing lens 206b that are used to identify the positions of the fixing parts 62 of the diffusing lens 206b can be reduced.

### THIRD EMBODIMENT

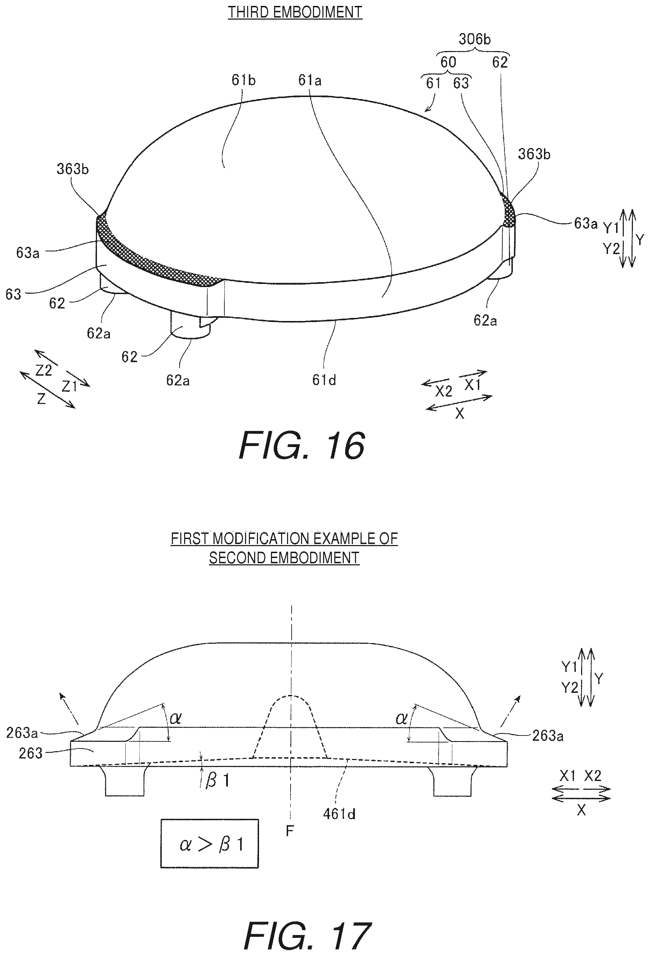

A third embodiment will now be described through reference to FIGS. 1 and 16. In this third embodiment, in addition to the configuration of the first embodiment above, fine texturing 363b (surface asperity, or concavity and convexity) that diffuses light is formed on the first faces 63a of the protrusions 63. Those components that are the same as in the first embodiment above will be numbered the same as in the first embodiment and will not be described again.

As shown in FIG. 16, with the liquid crystal television set 300 in accordance with the third embodiment (see FIG. 1), the fine texturing 363b that diffuses light is formed on the first faces 63a of the protrusions 63 of a diffusing lens 306b. The texturing 363b is formed by embossing. The liquid crystal television set 300 is configured so that when light is diffused by this texturing 363b, light that is non-uniform to the extent that it will not be recognized by the user is emitted on the display component 1. The liquid crystal television set 300 is an example of the "display device" in the present disclosure.

### Effect of Third Embodiment

The following effect can be obtained with the third embodiment.

In the third embodiment, just as in the first embodiment above, the first faces 63a on the top face 61 b side of the protrusions 63 are inclined to the bottom face 61 d. Consequently, brightness unevenness at the display component 1 due to the protrusions 63 of the diffusing lens 306b that is used to identify the positions of the fixing parts 62 of the diffusing lens 306b can be reduced.

Also, with the third embodiment, as discussed above, the first faces 63a has the fine texturing 363b. The fine texturing 363b diffuse light and is formed on the first faces 63a of the protrusions 63. Consequently, light can be diffused toward the display component 1 by the texturing 363b. As a result, brightness unevenness at the display component 1 due to the protrusions 63 of the diffusing lens 306b that is used to identify the positions of the fixing parts 62 of the diffusing lens 306b can be reduced.

### Modification Examples

The embodiments disclosed herein are just examples in every respect, and should not be interpreted as being limiting in nature. The scope of the invention being indicated by the appended claims rather than by the above description of the embodiments, all modifications (modification examples) within the meaning of the claims are included.

For example, in the first to third embodiments above, a liquid crystal television set is illustrated as an example of the display device of the present disclosure. However, the present invention is not limited to or by this. With the present invention, something other than a liquid crystal television set may be used as the display device. For instance, a PC (personal computer) display device or another such typical display device may be used.

Also, in the first to third embodiments above, the light emission faces of the protrusions are inclined so that the faces moved closer to the lower face as the distance from the LED increased. However, the present invention is not limited to or by this. The present invention may, for example, be such that the light emission faces of the protrusions are inclined so as to move away from the lower face as the distance from the LED increases.

Also, in the first to third embodiments above, fixing parts are provided at positions corresponding to the protrusions (overlapping positions) in plan view. However, the present invention is not limited to or by this. As long as the positions of the fixing parts are identified by the protrusions, the present invention may, for example, be such that the fixing parts are provided at positions that are offset from the protrusions in plan view.

Also, in the first to third embodiments above, two protrusions are provided. However, but the present invention is not limited to or by this. With the present invention, just one protrusion may be provided, or three or more may be provided.

Also, in the first to third embodiments above, four fixing parts are provided. However, the present invention is not limited to or by this. As long as the positions of the fixing parts are identified by the protrusions, the present invention may, for example, be such that from one to three fixing parts are provided, or five or more are provided.

Also, in the first to third embodiments above, the diffusing lenses are formed in a circular shape in plan view. However, the present invention is not limited to or by this. The present invention may, for example, be such that the diffusing lenses are formed in a rectangular shape in plan view.

Also, in the first to third embodiments above, the light emitting element of the present invention is formed by an LED. However, the present invention is not limited to or by this. The present invention may, for example, be such that the light emitting element of the present invention is constituted by an organic electroluminescence element.

Also, in the third embodiment above, texturing is formed on the light emission faces of the protrusions by embossing. However, the present invention is not limited to or by this. The present invention may, for example, be such that texturing is formed on the light emission faces of the protrusions by machining.

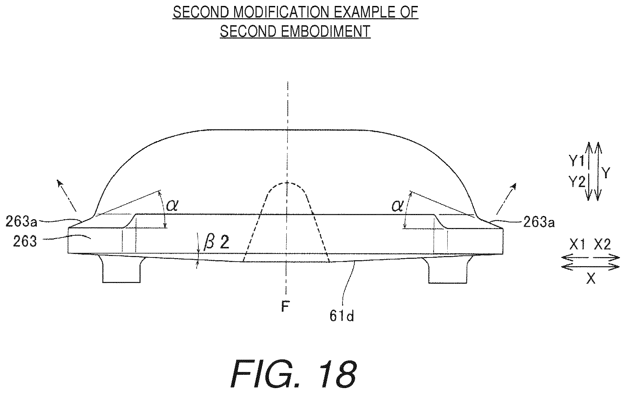

Also, in the second embodiment above, the lower face, which is an example of the second face or the bottom face in the present disclosure, is provided parallel to a plane that is perpendicular to the optical axis (center line) of the main body. However, the present invention is not limited to or by this. As in a first modification example of the second embodiment shown in FIG. 17, the present invention may be such that a bottom face 461 d, which is an example of the first face in the present disclosure, is inclined to a plane that is perpendicular to the optical axis F (center line) of the main body 61. Specifically, the bottom face 461 d may be inclined by an angle β1 in the same direction as the first faces 263a of the protrusions 263. The angle β1 is less than the angle α relative to a direction perpendicular to the optical axis F. Also, as in a second modification example of the second embodiment shown in FIG. 18, the present invention may be such that a bottom face 561 d is inclined by an angle β2 in the opposite direction from the first faces 263a of the protrusions 263.

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts unless otherwise stated.

As used herein, the following directional terms "forward", "rearward", "front", "rear", "up", "down", "above", "below", "upward", "downward", "top", "bottom", "side", "vertical", "horizontal", "perpendicular" and "transverse" as well as any other similar directional terms refer to those directions of a display device in an upright position. Accordingly, these directional terms, as utilized to describe the display device should be interpreted relative to a display device in an upright position on a horizontal surface. The terms "left" and "right" are used to indicate the "right" when referencing from the right side as viewed from the front of the front of the display device, and the "left" when referencing from the left side as viewed from the front of the display device.

The term "attached" or "attaching", as used herein, encompasses configurations in which an element is directly secured to another element by affixing the element directly to the other element; configurations in which the element is indirectly secured to the other element by affixing the element to the intermediate member(s) which in turn are affixed to the other element; and configurations in which one element is integral with another element, i.e. one element is essentially part of the other element. This definition also applies to words of similar meaning, for example, "joined", "connected", "coupled", "mounted", "bonded", "fixed" and their derivatives. Finally, terms of degree such as "substantially", "about" and "approximately" as used herein mean an amount of deviation of the modified term such that the end result is not significantly changed.

While only selected embodiments have been chosen to illustrate the present invention, it will be apparent to those skilled in the art from this disclosure that various changes and modifications can be made herein without departing from the scope of the invention as defined in the appended claims. For example, unless specifically stated otherwise, the size, shape, location or orientation of the various components can be changed as needed and/or desired so long as the changes do not substantially affect their intended function. Unless specifically stated otherwise, components that are shown directly connected or contacting each other can have intermediate structures disposed between them so long as the changes do not substantially affect their intended function. The functions of one element can be performed by two, and vice versa unless specifically stated otherwise. The structures and functions of one embodiment can be adopted in another embodiment. It is not necessary for all advantages to be present in a particular embodiment at the same time. Every feature which is unique from the prior art, alone or in combination with other features, also should be considered a separate description of further inventions by the applicant, including the structural and/or functional concepts embodied by such feature(s). Thus, the foregoing descriptions of the embodiments according to the present invention are provided for illustration only, and not for the purpose of limiting the invention as defined by the appended claims.

## Claims

1. An optical element comprising:
an emission component having a bottom face on which light is incident, and a top face from which the incident light is emitted;
a protrusion protruding outward in a radial direction of the emission component, and having a first face on a top face side and a second face on a bottom face side; and
a leg provided to at least one of the second face and the bottom face,
the first face being inclined relative to the second face.

2. The optical element according to claim 1, wherein
the first face is inclined to be closer to the second face as a distance from a center of the emission component increases.

3. The optical element according to claim 1, wherein
the first face is inclined to be closer to the second face as a distance from a center of the emission component decreases.

4. The optical element according to any one of claims 1 to 3, wherein
a boundary between the top face and the first face has a continuous curved shape.

5. The optical element according to any one of claims 1 to 4, wherein the first face has a continuous curved shape that curves in a convex manner toward the second face.

6. The optical element according to any one of claims 1 to 5, wherein the first face is linearly inclined at a specific angle relative to the second face.

7. The optical element according to any one of claims 1 to 6, wherein the first face has fine texturing.

8. The optical element according to any one of claims 1 to 7, wherein the first face is inclined at an angle of less than 90° relative to a center axis of the emission component.

9. The optical element according to any one of claims 1, 2 and 4 to 8, wherein
a distance between the first face and the second face in an axial direction of the emission component at a predetermined radial position is greater than the distance between the first face and the second face at a radial position that is farther from a center of the emission component than the predetermined radial position.

10. The display device according to any one of claims 1, 2 and 4 to 9, wherein
a distance between the first face and the bottom face in an axial direction of the emission component at a predetermined radial position is greater than the distance between the first face and the bottom face at a radial position that is farther from a center of the emission component than the predetermined radial position.

11. The display device according to any one of claims 1 and 3 to 8 wherein
a distance between the first face and the second face in an axial direction of the emission component at a predetermined radial position is greater than the distance between the first face and the second face at a radial position that is closer to a center of the emission component than the predetermined radial position.

12. The display device according to any one of claims 1, 3 to 8 and 11, wherein
a distance between the first face and the bottom face in an axial direction of the emission component at a predetermined radial position is greater than the distance between the first face and the bottom face at a radial position that is closer to a center of the emission component than the predetermined radial position.

13. A display device comprising:
a display component;
a light emitting element configured to emit light to the display component; and
the optical element according to any one of claims 1 to 12.
